# EUROPEAN PATENT SPECIFICATION

(11) **EP 4 029 921 B1**
(45) Date of publication and mention of the grant of the patent: **18.02.2026**
(21) Application number: 20864088.8
(22) Date of filing: 10.09.2020
(51) Int. Cl.: C09D 183/04, C09D 183/06, C09D 175/04, C09D 1/00, C09D 5/16, C08G 77/06, C08G 77/08, C08G 77/14

(54) **PRODUCTION OF AN ICEPHOBIC SURFACE USING THE SOL-GEL METHOD WITHOUT FLUORIDES ON COMMERCIAL POLYURETHANE PAINTS**
HERSTELLUNG EINER EISABWEISENDEN OBERFLÄCHE UNTER VERWENDUNG DES SOL-GEL-VERFAHRENS OHNE FLUORIDE AUF HANDELSÜBLICHEN POLYURETHANLACKEN
OBTENTION D'UNE SURFACE GLAÇOPHOBE AU MOYEN D'UN PROCÉDÉ SOL-GEL SANS FLUORURES SUR DES PEINTURES POLYURÉTHANE COMMERCIALES

(30) Priority: 13.09.2019 ES 201900141
(43) Date of publication of application: 20.07.2022
(73) Proprietor: Universidad Complutense De Madrid, 28040 Madrid (ES); FIDAMC (Fundación para la Investigación, Desarrollo y Aplicación de Materiales Compuestos), 28906 Madrid (ES)
(72) Inventor: CARREÑO PUERTAS, Francisco, 28025 Madrid (ES); CARMONA TEJERO, Noemí, 28004 Madrid (ES); RODRÍGUEZ DE LA FUENTE, Óscar, 28232 Madrid (ES); CALVO DEL VALLE, Silvia, 28003 Madrid (ES); RODRÍGUEZ GUDE, María, 28005 Madrid (ES)
(74) Representative: Pons IP
(86) International application number: PCT/ES2020/070544
(87) International publication number: WO 2021/048460

(56) References cited:
- WO-A1-2012/115986
- WO-A1-2015/175543
- WO-A1-2018/045467
- CN-U- 206 346 448
- US-A1- 2014 087 134
- US-A1- 2014 212 584
- BHARATHIBAI J BASU ET AL: "Effect of microstructure and surface roughness on the wettability of superhydrophobic sol-gel nanocomposite coatings", JOURNAL OF SOL-GEL SCIENCE AND TECHNOLOGY, KLUWER ACADEMIC PUBLISHERS, BO, vol. 56, no. 3, 17 August 2010 (2010-08-17), pages 278 - 286, XP019865021, ISSN: 1573-4846, DOI: 10.1007/S10971-010-2304-8
- MAHADIK SATISH A ET AL: "Silica based superhydrophobic coating for long-term industrial and domestic applications", JOURNAL OF ALLOYS AND COMPOUNDS, ELSEVIER SEQUOIA, LAUSANNE, CH, vol. 663, 22 December 2015 (2015-12-22), pages 487 - 493, XP029388493, ISSN: 0925-8388, DOI: 10.1016/J.JALLCOM.2015.12.016
- MICHELE MANCA ET AL: "Durable Superhydrophobic and Antireflective Surfaces by Trimethylsilanized Silica Nanoparticles-Based Sol−Gel Processing", LANGMUIR, vol. 25, no. 11, 2 June 2009 (2009-06-02), pages 6357 - 6362, XP055097086, ISSN: 0743-7463, DOI: 10.1021/la804166t

## Description

### TECHNICAL FIELD

The present invention belongs to the field of functional surfaces. More specifically, the invention relates to the method of preparing icephobic surfaces on commercial polyurethane paints that can be used in the aeronautics, wind, energy, and telecommunications sectors and in any other sector where the formation of ice must be prevented and its removal from various surfaces must be facilitated.

### BACKGROUND OF THE INVENTION

The formation of ice, its adhesion and its excessive accumulation on structures exposed to weathering is a problem in cold climate regions. A large number of failures in industry sectors such as electricity generation, transportation and distribution, the aeronautics industry or telecommunications networks occur as a result of ice accumulation.

In the European Union, one of its proposed 2050 targets is to have the world's safest air region. To do so, it intends, among other measures, to reduce the risks of flying under severe environmental conditions (*cordis.europa.eu*/*article id 400222* **2017**-06-07). In the United States, the National Transport Safety Board has listed the improvement of aviation safety as one of the most demanded requirements *(NTSB Press release on* **1999***-05-11).* The formation of ice on the surface of aircrafts is the main cause of air accidents in the world, over turbulence.

To that end, many efforts have been increased in recent decades to counteract the process of ice formation and accumulation. These efforts have focused preferably on two main lines of action: the use of **active** technologies that thaw ice once it has formed and the development of **passive** technologies to prevent ice formation.

Active technologies thaw ice after its formation by using electro-thermal meshes (WO200713583, CA2147084), mechanical systems with mechanical pumps that detach ice by means of sudden expansion (US5562265) or chemical systems consisting of antifreeze fluids or coatings (O. Parent et al. Cold Regions Science and Technology 65 (1) (2011) 88-96). The first technologies have the drawback of increasing the weight of the aircraft, and the fluids used in the chemical systems pose an environmental risk, because they may deteriorate the surface on which they are applied and involve a continuous effort of application.

Passive technologies are developed to prevent the formation of ice and control its adhesion on a surface once it has formed, modifying its properties and allowing the ice to detach with less effort or even due to its own weight or the air that can drag it. Passive systems cannot currently replace active systems, but they do increase their efficiency and reduce energy consumption; in some cases, their combined use has been suggested (C. Antonini et al. ILASS Europe (2011)).

Ice accumulation occurs when supercooled water droplets or snow or ice particles come into contact with a surface, freezing or agglomerating, respectively, which ends up modifying the aerodynamic profile of the aircraft and leading to the loss of performance.

A suitable modification of the surfaces exposed to freezing conditions could reduce the adhesion energy of the ice to said surfaces (thus facilitating its detachment) and/or delay its formation.

The most common way to achieve hydrophobic and/or icephobic behaviour is by using polymeric materials with a high fluoride content (fluoropolymers, Teflon, etc., as described in documents such as ES2398274, US20070009657, US2016/0129400 or WO2015012910, either in the form of coatings (L. Makkonen, Journal of Adhesion Science and Technology 26 (4-5) (2012) 413-445*;* Z. Peng et al. Applied Surface Science 259 (2012) 764-768*)* and in the form of solid particles embedded in other materials (X. Wu, el al., Chemical Engineering Journal 355 (2019) 901-909*,* US20150368500, CN10127499, WO2018/073460A1, ES2556158A1) or using additives such as carbon nanotubes (ES2398274). However, these materials tend to have low wear resistance. Furthermore, although it seems logical that a hydrophobic surface is also icephobic, some research has shown contradictory results, since the interaction forces involved in the adhesion phenomenon of a water droplet and of ice crystals are different *(*H. Sojoudi et al. Soft Mater 12 (2016) 1938-1963*;* M. Nosonovsky et al. ACS Nano 6, 10 (2012) 8488-8491*).*

Therefore, it is still necessary to develop environmentally friendly technologies that prevent ice from accumulating on surfaces exposed to the cold.

### DESCRIPTION OF THE INVENTION

The present invention describes a method for producing an icephobic surface and is set out in the appended set of claims. The method consists in modifying the properties of the surface to be protected by applying an icephobic coating, which presents on the outermost face thereof a series of molecular groups with low affinity to water molecules, enabling the appearance of a sliding interface on which the ice adheres with less strength, enabling it to be removed more easily.

The method is based on a fluoride-free sol-gel method and it is applied to commercial polyurethane-based paints comprising one or more molecules of an isocyanate reactive group [-NCO] and one or more molecules with the alcohol reactive group [-OH] which react with each other to produce molecules of the urethane group in the form of a three-dimensional network of high molecular weight. Urethane-based paints may further comprise a solvent of a non-aqueous nature as well as form additives, with a varied size and nature.

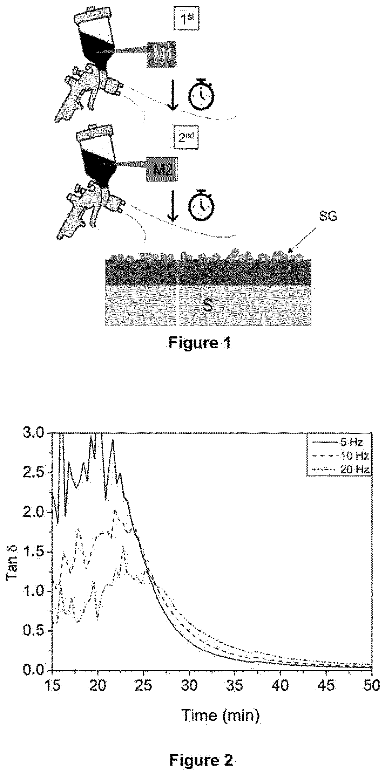

More specifically, the method for producing an icephobic surface using the sol-gel method without fluorides on commercial polyurethane paints (Figure 1) comprises the following steps.
a) Prepare a commercial polyurethane-based paint by mixing the components provided by the manufacturer.
b) Add a silicon alkyl-alkoxide to the commercial polyurethane-based paint mixture (M1).
c) Stir until the mixture is homogeneous.
d) Deposit the modified paint on a substrate (S) to form a continuous and homogeneous layer (P) (step 1).
e) Partially dry the continuous layer of paint.
f) Prepare a silica sol by means of hydrolysis of the alkoxides and/or silicon alkyl-alkoxides in a hydroalcoholic medium.
g) Stir the sol until the hydrolysis is complete.
h) Add an acid or metal organic catalyst until acidic pH.
i) Stir the sol to carry out polycondensation, giving rise to a gel.
j) Partially deposit the produced sol-gel (M2) by means of a sprayer/nebulizer in the form of droplets which do not completely coat the previous surface (step 2).
k) Densify the deposited sol-gel by means of heat treatment or let it dry under atmospheric conditions for at least 24 hours.

The alkyl-siloxanes that are added to the polyurethane-based paint mixture are mono-substituted (for example, 3-glycidoxypropyltrimethoxysilane (GLYMO)), and/or disubstituted (for example, polydimethylsiloxane, (PDMS)) in a concentration between 0.5 and 20.0% by weight, concentrations between 4.0 and 10.0% by weight being preferable. This paint and alkyl-siloxane mixture is represented as M1 in the diagram of the production method of Figure 1.

The coating produced, in addition to having excellent icephobic features, is able to reduce the adhesion of ice on a substrate on which it has been applied, thus reducing its accumulation and facilitating its removal. A fluid interface or a weak bonding layer is generated between the surface of the coating and the ice so that the ice cannot adhere strongly, facilitating its detachment. These coatings allow the adhesion strength of the ice formed on the surface they protect to be reduced by between 0 and 80%, in some cases obtaining detachment stresses of less than 150 kPa.

The method does not use halogenated reagents, which involves a less harmful and significantly cheaper process for the environment than those that use fluoride.

The coating can be applied to protect the surface of various components, either in whole or in part, such as turbine engine parts, aircraft components, wind turbine components, ship components, power lines, telecommunications, etc.

### BRIEF DESCRIPTION OF THE FIGURES

Figure 1 shows a diagram of the method for preparing the icephobic coatings.
Figure 2 shows the viscoelastic behaviour of the paint against deformations with different frequencies that leads to establishing the curing time between step 1 and step 2.
Figure 3 shows optical microscopy (OM) images of the surfaces prepared by the method of the present invention at different steps where P₀ is the reference paint alone; P₂, P₅ and P₁₀ are paints with a concentration of 2, 5 and 10%, respectively, of PDMS by weight; SG1 and SG2 are paints after sol-gel spraying and subsequent densification with different curing times between step 1 and step 2: 6 hours for SG1 and 4 hours for SG2.
Figure 4 shows the roughness profile of a commercial paint sample (a) and of a surface prepared on it (b).
Figure 5 shows a photograph of the device developed to measure the adhesion strength of ice.
Figure 6 shows the freeze-thaw ice adhesion curve (stress - deformation) of a reference commercial paint sample (a) and another one on one of the prepared surfaces (b).
Figure 7 shows the graph that represents the adhesion strength of ice measured in one same area of a reference commercial paint sample (a) and another one on one of the prepared surfaces (b) compared with the bibliographic values for the commercial paint (c) (Golovin, K., et al. Science Advances. (2016) 2(3), e1501496).
Figure 8 shows the cross-cut test according to standard ISO 2409.
Figure 9 shows the freeze-thaw adhesion curve (stress - deformation) of a non-eroded sample (a), another sample eroded for 10 s (b) and 20 s (c), and a sample repaired after erosion for 10 s (d) and 20 s (e).

### PREFERRED EMBODIMENT OF THE INVENTION

The present invention is further illustrated by the following examples, which are not intended to limit the scope thereof.

### Example 1.

This example relates to the preparation of an icephobic surface on a modified commercial polyurethane-based paint (Figure 1).

First, a commercial polyurethane-based **paint** ALEXIT 411-77 is prepared following the manufacturer's instructions (mixing the three components). During this preparation, PDMS is also added in such an amount that it results in a concentration of 10.0% by weight of the final mixture.

At the same time, a panel made of epoxy resin and carbon fibre composite material is prepared which acts as a substrate. This method involves panel cleaning, sanding and priming operations.

The paint mixture is loaded into a spray gun and applied to the panel according to the manufacturer's recommendations. Then it is left to react for 4 hours at 23 °C (curing step 1).

Next, a sol containing 29.36% ethanol, 20.11% water, 23.63% TEOS and 26.90% GLYMO (all percentages by weight) is prepared. The mixture is left to hydrolyse for one day under magnetic stirring at room temperature.

Once this time has elapsed, 37% hydrochloric acid is added up to a final concentration of 0.9% HCl and it is left to react for another 3 hours before being applied on the partially cured paint by means of a spray gun with a nozzle having a 1.0 mm opening at a pressure of 2 bar. The application is carried out in such a way that the previously painted surface is not completely covered, giving rise to a heterogeneous coating with droplets, exposing part of the coating of the paint.

Lastly, densification of the last layer of the sample is completed by means of heat treatment in an oven at 70 °C for 3 hours. This treatment may be optional. The sample can complete the curing and densification process under ambient conditions for at least 24 h to reach the same state (curing step 2).

### Example 2.

This example compares the viscoelastic results of the coated paint according to example 1 and a commercial paint that has not been modified with PDMS.

Figure 2 shows the variation of the ratio between the storage modulus and the loss modulus (tan δ) in a rheological test of the unmodified paint at 70 °C, which leads to establishing the gel time thereof. With the establishment of this parameter, the application window of the second sol-gel mixture begins when it is applied on the unmodified paint or on the commercial paint mixed with PDMS as an additive. This time interval is defined between 30 and 35 minutes for curing at 70 °C and between 4 and 6 hours at room temperature.

### Example 3.

This example shows the results of the optical microscopy (OM) images of the coated paint according to example 1 and a commercial paint that has not been modified with PDMS.

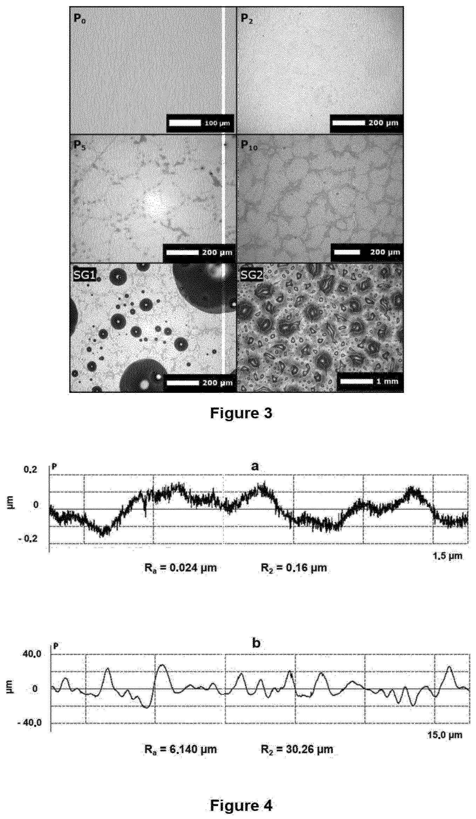

Figure 3 shows optical microscopy (OM) images of the surfaces with untreated paint (P₀), paints with different amounts of PDMS (P₂, P₅ and P₁₀, with 2, 5 and 10% by weight, respectively) and paint after sol-gel spraying and its subsequent densification with different curing times between step 1 and step 2 (SG1 and SG2).

The prepared surfaces show a slight separation of the phases for the samples containing PDMS, being more visible as the amount of PDMS in the paint increases and favouring the presence of more hydrophilic areas and other more hydrophobic areas. When the sol-gel layer is added, visible droplet-shaped protrusions appear both microscopically (SG1) and macroscopically (SG2).

### Example 4.

This example shows the roughness results of the coated paint according to example 1 compared to a commercial paint that has not been modified with PDMS.

Figure 4a shows an example of the roughness profiles and related parameters of the (unmodified) reference paint and Figure 4b shows another example of the profile of the prepared paint according to example 1. The reference commercial paint has an average roughness (Rₐ) of 0.017 ± 0.006 µm and the prepared coating of 5.2 ± 1.9 µm.

### Example 5.

This example shows a comparison of the adhesion strength of ice on the modified paint surface according to example 1 and on the unmodified paint.

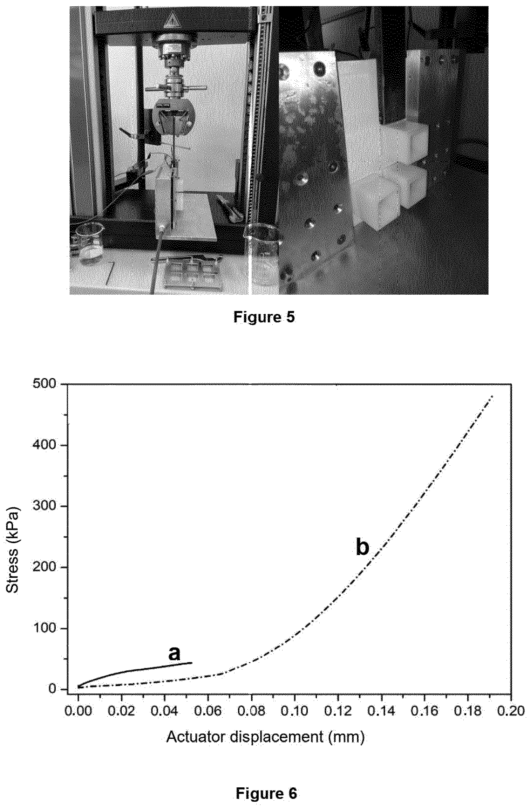

To measure the adhesion strength of ice on the surfaces, a device is used (Figure 5) which consists of a 1 kN universal shear testing machine, a force transducer and six cuvettes with sides measuring 2.5 x 2.5 cm² which are filled with water and placed on the surfaces to be measured which, in turn, are placed on Peltier cells that allow the temperature to be lowered to -15 °C.

Figure 6 shows the results obtained on the ice adhesion curve for the surface of example 1 and for the reference commercial paint. It is observed that ice adheres with a strength of 116 ± 28 kPa, which represents a 73% reduction compared to the unmodified polyurethane-based paint.

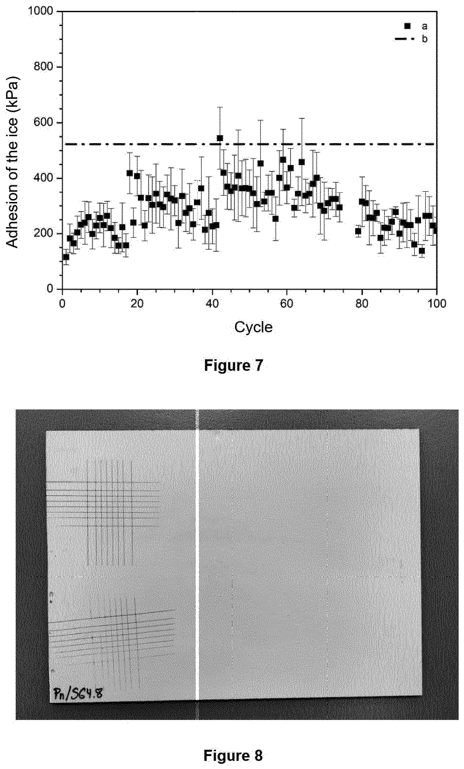

Figure 7 shows the adhesion strength of ice on one same area of the same sample after 100 cycles of a mechanical testing with ice formation-pulling on one same surface, indicating the degree of reproducibility of the test and wear on the sample. The bibliographic value of the adhesion strength of unmodified commercial paint (Golovin, K., *et al.* Science Advances. **(2016)** 2(3), e1501496) is also shown for comparative purposes.

### Example 6.

This example relates to adhesion to the substrates of the prepared surfaces.

To check the adherence of the prepared surfaces to the substrates, several cross-cut resistance tests are carried out. Figure 8 shows a test of this adhesion according to standard ISO 2409 carried out on the sample of example 1. It is observed that the coating has not become detached after the test, which confirms that the adhesion of the coating to the substrate is very good.

### Example 7.

This example relates to the possible corrosion and repair of the prepared surfaces.

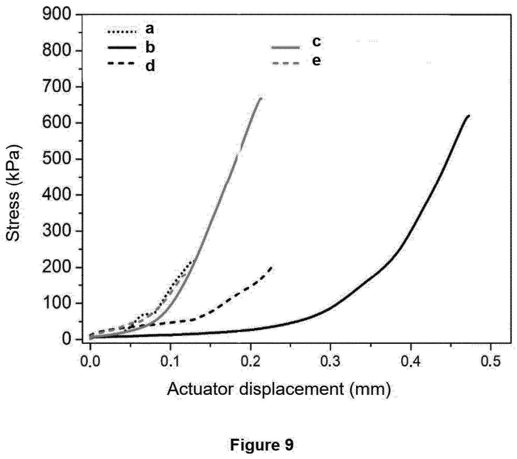

Sandblast erosion tests are performed according to standard ASTM G76-18 to determine the repairability of the prepared surfaces. Figure 9 shows the ice adhesion curve of a painted sample according to the method of the present invention that has been degraded for 10 s and 20 s and subsequently repaired by applying the sol-gel M2 again (Figure 1). The results show a strong increase in the adhesion stress of ice on the eroded samples which recovers the initial values when repaired by applying the sol-gel layer of the method of the invention. This allows the repairability of the surface to be demonstrated.

## Claims

1. A method for producing an icephobic surface comprising the following steps:
a) prepare a commercial polyurethane-based paint by mixing the components provided by the manufacturer;
b) add a silicon alkyl-alkoxide to the commercial polyurethane-based paint mixture (M1);
c) stir until the mixture is homogeneous;
d) deposit the modified paint on a substrate (S) to form a continuous and homogeneous layer (P);
e) partially dry the continuous layer of paint;
f) prepare a silica sol by means of hydrolysis of an alkoxide and/or a silicon alkyl-alkoxide in a hydroalcoholic medium;
g) stir the sol until hydrolysis is complete;
h) add an acid or metal organic catalyst until acidic pH;
i) stir the sol to carry out polycondensation, giving rise to a gel;
j) partially deposit the produced sol-gel (M2) obtained in step (i) by means of a sprayer/nebuliser in the form of droplets on the partially dry layer (P) obtained in step (e) which do not completely coat the previous surface;
k) densify the deposited sol-gel by means of heat treatment or let it dry under atmospheric conditions for at least 24 h;
wherein fluorides are not used and wherein the gel is deposited on the surface in the form of three-dimensional droplets without coating the entire surface.

2. The method for producing an icephobic surface, according to claim 1, wherein the alkyl-alkoxide that is added to the commercial polyurethane-based paint mixture is a mono-substituted and/or disubstituted alkyl-siloxane.

3. The method for producing an icephobic surface, according to claim 2, wherein the alkyl-siloxane is 3-glycidoxypropyltrimethoxysilane (GLYMO).

4. The method for producing an icephobic surface, according to claim 2, wherein the alkyl-siloxane is polydimethylsiloxane (PDMS).

5. The method for producing an icephobic surface, according to claims 2 to 4, wherein the alkyl-alkoxide is added in a concentration between 0.5 and 20.0% by weight.

6. The method for producing an icephobic surface, according to claim 1, wherein the modified paint (M1) is applied by spraying to form a continuous and homogeneous layer (P).

7. The method for producing an icephobic surface, according to claim 1, wherein the partial drying of the deposited paint layer (P) is carried out at a temperature of 70 °C for 30 minutes or 4 hours at room temperature.

8. The method for producing an icephobic surface, according to claim 1, wherein the silica sol is prepared by means of the hydrolysis of tetraethyl orthosilicate (TEOS) and glycidoxypropyltrimethoxysilane (GLYMO).

9. The method for producing an icephobic surface, according to claims 1 and 8, wherein the sol is magnetically stirred for 3 hours.

10. The method for producing an icephobic surface, according to claim 1, wherein the catalyst used for polycondensation is hydrochloric acid (HCl).

11. The method for producing an icephobic surface, according to claim 1, wherein the pH in the polycondensation step is close to 2.

12. The method for producing an icephobic surface, according to claim 1, wherein the sol-gel (M2) is deposited on the paint layer (P) by spraying, forming a heterogeneous layer of droplets which does not completely cover the previous surface.

13. The method for producing an icephobic surface, according to claim 1, wherein the deposited sol-gel (SG) densifies at a temperature between 20 and 150 °C.

## Patentansprüche

1. Verfahren zur Herstellung einer eisabweisenden Oberfläche, umfassend die folgenden Schritte:
a) Herstellen eines handelsüblichen Lacks auf Polyurethanbasis durch Mischen der vom Hersteller bereitgestellten Komponenten;
b) Hinzufügen von Siliciumalkylalkoxid zu dem Gemisch (M1) aus handelsüblichem Lack auf Polyurethanbasis;
c) Rühren, bis das Gemisch homogen ist;
d) Auftragen des modifizierten Lacks auf ein Substrat (S), um eine kontinuierliche und homogene Schicht (P) zu bilden;
e) teilweises Trocknen der kontinuierlichen Lackschicht;
f) Herstellen eines Kieselsols mittels Hydrolyse eines Alkoxids und/oder eines Siliciumalkylalkoxids in einem hydroalkoholischen Medium;
g) Rühren des Sols, bis die Hydrolyse abgeschlossen ist;
h) Hinzufügen einer Säure oder eines metallorganischen Katalysators, bis der pH-Wert sauer ist;
i) Rühren des Sols, um eine Polykondensation durchzuführen, wodurch ein Gel entsteht;
j) teilweises Auftragen des in Schritt (i) erhaltenen Sol-Gels (M2) mittels eines Zerstäubers/Verneblers in Form von Tröpfchen auf die in Schritt (e) erhaltene teilweise trockene Schicht (P), die die vorherige Oberfläche nicht vollständig bedecken;
k) Verdichten des aufgetragenen Sol-Gels mittels Wärmebehandlung oder trocknen lassen unter atmosphärischen Bedingungen für mindestens 24 h;
wobei keine Fluoride verwendet werden und wobei das Gel in Form von dreidimensionalen Tröpfchen auf der Oberfläche aufgetragen wird, ohne die gesamte Oberfläche zu beschichten.

2. Verfahren zur Herstellung einer eisabweisenden Oberfläche nach Anspruch 1, wobei das Alkylalkoxid, das zu dem Gemisch aus handelsüblichem Lack auf Polyurethanbasis hinzugefügt wird, ein mono- und/oder di-substituiertes Alkylsiloxan ist.

3. Verfahren zur Herstellung einer eisabweisenden Oberfläche nach Anspruch 2, wobei das Alkylsiloxan 3-Glycidoxypropyltrimethoxysilan (GLYMO) ist.

4. Verfahren zur Herstellung einer eisabweisenden Oberfläche nach Anspruch 2, wobei das Alkylsiloxan Polydimethylsiloxan (PDMS) ist.

5. Verfahren zur Herstellung einer eisabweisenden Oberfläche nach Anspruch 2 bis 4, wobei das Alkylalkoxid in einer Konzentration zwischen 0,5 und 20,0 Gew.-% hinzugefügt wird.

6. Verfahren zur Herstellung einer eisabweisenden Oberfläche nach Anspruch 1, wobei der modifizierte Lack (M1) durch Sprühen aufgebracht wird, um eine kontinuierliche und homogene Schicht (P) zu bilden.

7. Verfahren zur Herstellung einer eisabweisenden Oberfläche nach Anspruch 1, wobei das teilweise Trocknen der aufgetragenen Lackschicht (P) bei einer Temperatur von 70 °C für 30 Minuten oder 4 Stunden bei Raumtemperatur durchgeführt wird.

8. Verfahren zur Herstellung einer eisabweisenden Oberfläche nach Anspruch 1, wobei das Kieselsol mittels der Hydrolyse von Tetraethylorthosilikat (TEOS) und Glycidoxypropyltrimethoxysilan (GLYMO) hergestellt wird.

9. Verfahren zur Herstellung einer eisabweisenden Oberfläche nach Anspruch 1 und 8, wobei das Sol für 3 Stunden magnetisch gerührt wird.

10. Verfahren zur Herstellung einer eisabweisenden Oberfläche nach Anspruch 1, wobei der für die Polykondensation verwendete Katalysator Salzsäure (HCl) ist.

11. Verfahren zur Herstellung einer eisabweisenden Oberfläche nach Anspruch 1, wobei der pH-Wert in dem Polykondensationsschritt nahe bei 2 liegt.

12. Verfahren zur Herstellung einer eisabweisenden Oberfläche nach Anspruch 1, wobei das Sol-Gel (M2) durch Sprühen auf die Lackschicht (P) aufgetragen wird, wobei eine heterogene Schicht von Tröpfchen gebildet wird, die die vorherige Oberfläche nicht vollständig bedeckt.

13. Verfahren zur Herstellung einer eisabweisenden Oberfläche nach Anspruch 1, wobei das aufgetragene Sol-Gel (SG) bei einer Temperatur zwischen 20 und 150 °C verdichtet wird.

## Revendications

1. Procédé de production d'une surface glaçophobe comprenant les étapes suivantes :
a) préparer une peinture commerciale à base de polyuréthane en mélangeant les composants fournis par le fabricant ;
b) ajouter un alkyl-alkoxyde de silicium au mélange de peinture commerciale à base de polyuréthane (M1) ;
c) remuer jusqu'à ce que le mélange soit homogène ;
d) déposer la peinture modifiée sur un substrat (S) pour former une couche continue et homogène (P) ;
e) sécher partiellement la couche continue de peinture ;
f) préparer un sol de silice au moyen de l'hydrolyse d'un alcoxyde et/ou d'un alkyl-alkoxyde de silicium en milieu hydroalcoolique ;
g) agiter le sol jusqu'à ce que l'hydrolyse soit complète ;
h) ajouter un catalyseur organique acide ou métallique jusqu'à obtention d'un pH acide ;
i) agiter le sol pour réaliser la polycondensation, donnant lieu à un gel ;
j) déposer partiellement le sol-gel (M2) produit obtenu à l'étape i) au moyen d'un pulvérisateur/nébuliseur sous la forme de gouttelettes sur la couche partiellement sèche (P) obtenue à l'étape e) qui ne recouvrent pas complètement la surface précédente ;
k) densifier le sol-gel déposé au moyen d'un traitement thermique ou le laisser sécher dans des conditions atmosphériques pendant au moins 24 h ;
dans lequel les fluorures ne sont pas utilisés et dans lequel le gel est déposé sur la surface sous forme de gouttelettes tridimensionnelles sans recouvrir l'intégralité de la surface.

2. Procédé de production d'une surface glaçophobe, selon la revendication 1, dans lequel l'alkyl-alkoxide qui est ajouté au mélange de peinture commerciale à base de polyuréthane est un siloxane d'alkyle mono-substitué et/ou di-substitué.

3. Procédé de production d'une surface glaçophobe, selon la revendication 2, dans lequel l'alkyl-siloxane est le 3-glycidoxypropyltriméthoxysilane (GLYMO).

4. Procédé de production d'une surface glaçophobe, selon la revendication 2, dans lequel l'alkyl-siloxane est le polydiméthylsiloxane (PDMS).

5. Procédé de production d'une surface glaçophobe, selon les revendications 2 à 4, dans lequel l'alkyl-siloxane est ajouté à une concentration comprise entre 0,5 et 20,0 % en poids.

6. Procédé de production d'une surface glaçophobe, selon la revendication 1, dans lequel la peinture (M1) modifiée est appliquée par pulvérisation pour former une couche continue et homogène (P).

7. Procédé de production d'une surface glaçophobe, selon la revendication 1, dans lequel le séchage partiel de la couche de peinture déposée (P) est effectué à une température de 70 °C pendant 30 minutes ou 4 heures à température ambiante.

8. Procédé de production d'une surface glaçophobe, selon la revendication 1, dans lequel le sol de silice est préparé au moyen de l'hydrolyse de l'orthosilicate de tétraéthyle (TEOS) et du glycidoxypropyltriméthoxysilane (GLYMO).

9. Procédé de production d'une surface glaçophobe, selon les revendications 1 et 8, dans lequel le sol est agité magnétiquement pendant 3 heures.

10. Procédé de production d'une surface glaçophobe, selon la revendication 1, dans lequel le catalyseur utilisé pour la polycondensation est l'acide chlorhydrique (HCl).

11. Procédé de production d'une surface glaçophobe, selon la revendication 1, dans lequel le pH dans l'étape de polycondensation est proche de 2.

12. Procédé de production d'une surface glaçophobe, selon la revendication 1, dans lequel le sol-gel (M2) est déposé sur la couche de peinture (P) par pulvérisation, formant une couche hétérogène de gouttelettes qui ne recouvre pas complètement la surface précédente.

13. Procédé de production d'une surface glaçophobe, selon la revendication 1, dans lequel le sol-gel (SG) déposé se densifie à une température comprise entre 20 et 150 °C.
